# EUROPEAN PATENT SPECIFICATION

(11) **EP 1 272 050 B1**
(45) Date of publication and mention of the grant of the patent: **12.07.2006**
(21) Application number: 01919637.7
(22) Date of filing: 06.04.2001
(51) Int. Cl.: A23K 1/00, A23K 1/18, A23K 1/16, A23K 3/00

(54) **PET FOOD**
HAUSTIERFUTTER
ALIMENTS POUR ANIMAUX FAMILIERS

(30) Priority: 07.04.2000 GB 0008657
(43) Date of publication of application: 08.01.2003
(73) Proprietor: Mars U.K. Limited, Slough, Berks. SL1 4JK (GB)
(72) Inventor: BRYANT, Geoffrey, Charles, Thame, Oxon OX9 3ZG (GB); BLANSHARD, Philip, Roger, Harrogate, North Yorkshire HG2 9LG (GB); TOWNSEND, Stewart, Yorba Linda, CA 92886 (US)
(74) Representative: Marlow, Nicholas Simon
(86) International application number: PCT/GB2001/001592
(87) International publication number: WO 2001/076386

(56) References cited:
- WO-A-98/18610
- US-A- 4 145 447
- US-A- 4 551 343
- US-A- 5 045 339

## Description

The present invention relates to a pet food, particularly a dry pet biscuit.

Animal, particularly dog, food is often in the form of dry biscuits. One type of such food is provided as a 'treat' for an animal, to be eaten between main meals. Such products are desirably hard so that they last a long time in the animal=s mouth, retain the animal's interest and provide an effective tooth cleaning action.

Known animal biscuits are made by cooking a low water content dough at a high temperature. Typically, the dough includes flour, fat and salt and about 20 to 30% water and is dried in an oven for between 5 and 40 minutes at above 100°C and often above 150°C; faster drying can lead to burning of the product; the risk of burning also limits how much water can be removed from the biscuit. Shorter drying times will result in removal of less water.

It would be desirable to make a hard biscuit in a shorter time than is possible with conventional techniques.

According to the invention there is provided a method for making a foodstuff comprising: forming a mixture comprising pre-gelatinised starch, water and a plasticiser; introducing the mixture into a mould; and heating the mixture while subjecting it to a pressure of at least 5MPa in the mould.

Preferably, the mixture is subjected to a pressure of at least about 10MPa.

Preferably, the mould surface is heated to a temperature of from about 90°C to about 170°C, more preferably from about 100°C to about 130°C, most preferably about 120°C.

Preferably, the mixture is subjected to the high pressure for at least about 10s, more preferably at least about 15s, most preferably from about 20s to about 40s. Also preferably, the mixture is subjected to the high pressure for no more than about 60s.

The preferred starch source is breadcrumbs.

Preferred plasticisers include glycol (the most preferred plasticiser) and glycerol. Preferably, the plasticiser is present at up to about 6%, more preferably at from about 1% to about 6%, most preferably at about 1.5% to 4%, by weight of mixture.

Preferably the water content of the mixture is no more than about 15%, more preferably no more than about 10%, more preferably from about 2% to 10%, still more preferably about 6%, by weight of mixture.

In addition to the main ingredients of starch, water and plasticiser, additives may be present, including edible fibre such as bran, preferably broad bran which has a particle size of from about 1mm to about 4mm. If it is employed, the fibre content is preferably from about 5% to 20%, more preferably from about 8% to 10%, by weight of mixture. The presence of fibre imparts a laminar material structure to the biscuit.

Other preferred additives include flavourants, colourants, preservatives, antioxidants and functional dietary additives such as minerals and vitamins. Since the biscuits made according to the invention are subjected to only low temperatures during cooking, thermally unstable and volatile additives can be used which: could not be used in conventional, higher temperature, biscuit making processes. The Arrhenius equation predicts that reactions having an activation energy of 50kJ/mol proceed more than 10 times more quickly at 180°C than at 110°C; reactions having an activation energy of 200kJ/mol proceed more than 15000 times more quickly at 180°C than at 110°C. Most reactions have an activation energy within the range 50kJ/mol to 200kJ/mol, and it will be appreciated that less additive is lost by reaction in processes according to the invention than in conventional baking processes, and that some additives effectively unusable in conventional baking processes are usable in processes according to the invention. It will also be appreciated that the lower temperatures, lower cooking times and higher pressures of processes according to the invention (compared to conventional baking processes) raises the maximum acceptable boiling point of usable additives.

An example of a volatile additive is eucalyptus oil. In conventional processes, about 80% of the eucalyptus oil in the dough is lost during cooking; in preferred processes according to the invention, no more than 10% is lost.

The starch content of the mixture is preferably at least about 40%, preferably about 70% to about 98%, by weight. A mixture containing approximately equal quantities of starch in the form of breadcrumbs and caseinate has been found to provide a satisfactory product.

It is also preferred that the mixture includes about 1% by weight of a flow improving additive such a silica to improve the flow of the mixture into the moulds.

The invention will be further described by the following example.
A mixture comprising:

| | |
|---|---|
| breadcrumbs with a water content of 3 to | 95.25% by |
| 7% | weight |
| beef liver powder | 2% by weight |
| glycol | 2% by weight |
| smoke aroma | 0.5% by weight |
| red iron oxide | 0.25% by weight |

was made in a ribbon blend mixer. 25g of the mixture was introduced into each mould of two arrays each of 32 titanium coated steel moulds. The bottom half of each mould was an annular cavity and the top half a complementary annulus. The moulds were of dimensions to produce lenticular toroidal biscuits of 55mm diameter with a central hole of 18mm diameter, a maximum thickness of 12mm and a minimum thickness at the outside edge of 8mm.

Each mould was subjected to a pressure of about 4 tonnes for about 15 to 40s. While being held at that pressure the top mould was heated to about 110°C to 120°C and the bottom mould to about 120°C to 130°C.

The press used to apply pressure to the moulds was a hydraulic press, a JRD/Bipel 170T upstroking press.

The toroidal biscuits produced were found to have a relatively high density compared with similar biscuits produced by conventional techniques, no internal voids and a water content of about 6% by weight. They were very hard and exhibited long lasting times when chewed by dogs.

## Claims

1. A method for making a foodstuff comprising:
forming a mixture comprising pre-gelatinised starch, water and a plasticiser;
introducing the mixture into a mould; and
heating the mixture while subjecting it to a pressure of at least 5MPa in the mould.

2. A method according to claim 1 in which the mixture contains no more than 15%, preferably no more than 10%, by weight water.

3. A method according to claim 1 or 2 in which the pre-gelatinised starch is breadcrumbs.

4. A method according to any preceding claim in which the mixture is subjected to the high pressure for at least about los, more preferably at least about 15s, most preferably from 20s to 40s.

5. A method according to any preceding claim in which the mixture is subjected to the high pressure for no more than about 60s.

6. A method according to any preceding claim in which the plasticiser is present at up to about 6%, more preferably at from 1% to 4%, most preferably at about 1.5%, by weight of mixture.

## Patentansprüche

1. Verfahren zum Herstellen eines Nahrungsmittels, das die folgenden Schritte umfasst:
Bilden eines Gemischs, das vorgelatinierte Stärke, Wasser und einen Weichmacher beinhaltet;
Einleiten des Gemischs in eine Form; und
Erhitzen des Gemischs, während es gleichzeitig einem Druck von wenigstens 5 MPa in der Form ausgesetzt wird.

2. Verfahren nach Anspruch 1, wobei das Gemisch nicht mehr als 15 Gew.-%, vorzugsweise nicht mehr als 10 Gew.-% Wasser enthält.

3. Verfahren nach Anspruch 1 oder 2, wobei die vorgelatinierte Stärke aus Brotkrümeln besteht.

4. Verfahren nach einem der vorherigen Ansprüche, wobei das Gemisch dem hohen Druck wenigstens etwa 10 s, bevorzugter wenigstens etwa 15 s, am bevorzugtesten 20 s bis 40 s lang ausgesetzt wird.

5. Verfahren nach einem der vorherigen Ansprüche, wobei das Gemisch dem hohen Druck nicht länger als etwa 60 s ausgesetzt wird.

6. Verfahren nach einem der vorherigen Ansprüche, wobei der Weichmacher in einem Gewichtsanteil von etwa 6 %, bevorzugter von 1 % bis 4 %, am bevorzugtesten von etwa 1,5 % des Gemischs vorliegt.

## Revendications

1. Procédé de préparation d'un produit alimentaire comprenant :
former un mélange comprenant de l'amidon pré-gélifié, de l'eau et un plastifiant;
introduire le mélange dans un moule; et
chauffer le mélange tout en le soumettant à une pression d'au moins 5 Mpa dans le moule.

2. Procédé selon la revendication 1, dans lequel le mélange ne contient pas plus de 15%, de préférence pas plus de 10% en poids d'eau.

3. Procédé selon la revendication 1 ou 2, dans lequel l'amidon pré-gélifié est de la mie de pain.

4. Procédé selon l'une quelconque des revendications précédentes, dans lequel le mélange est soumis à la haute pression pendant au moins environ 10 secondes, de préférence au moins environ 15 secondes et de préférence encore au moins environ 20 à 40 secondes.

5. Procédé selon l'une quelconque des revendications précédentes, dans lequel le mélange est soumis à la haute pression pendant pas plus d'environ 60 secondes.

6. Procédé selon l'une quelconque des revendications précédentes, dans lequel le plastifiant est présent à un maximum d'environ 6%, de préférence de 1 % à 4% et de préférence encore à environ 1,5% en poids du mélange.
